# EUROPEAN PATENT APPLICATION

(11) **EP 1 970 613 A1**
(43) Date of publication of application: **17.09.2008**
(21) Application number: 08152659.2
(22) Date of filing: 12.03.2008
(51) Int. Cl.: F16L 25/14, F16L 21/06

(54) **Pipe coupling**

(30) Priority: 12.03.2007 US 716741
(71) Applicant: Krausz Industries Development Ltd., 66559 Tel Aviv (IL)
(72) Inventor: Krausz, Eliezer, 64238 Tel-Aviv (IL); Chiproot, Avi, 44278 Kfar-Saba (IL)
(74) Representative: Pizzoli, Antonio

(57) **Abstract**

The invention relates to the interconnection of pipes. The invention provides a coupling for straight line connection of pipes. The improved releasable band-clamp coupling is disclosed for mechanical and hydraulic interconnection of the ends of a first pipe and a co-axial second pipe, both being at least 50mm outer diameter. The first pipe being equal to or up to 55mm larger than the diameter of the second pipe. The coupling (10) comprises a central housing (16) of cross-section resembling a wide, low-wall channel, the walls (18) thereof facing away from the center of the pipes. The central housing (16) prevents separation of two curved outer clamp members (22). A pair of substantially parallel clamping extensions (30) allows screw clamping. Two-part circumferential elastomeric seal members comprise a thicker portion (24) and a thinner portion (36), and a sloped internally-toothed grip washer (26) disposed proximate to each of the projection second sides.

## Description

### FIELD OF THE INVENTION

The present invention relates to the interconnection of pipes.
More particularly, the invention provides a coupling for straight line interconnection of flangeless pipes and provides a pipe grip mechanism to resist axial separation forces.

### BACKGROUND OF THE INVENTION

Many satisfactory solutions exist and are in use for the joining of pipes made of copper, steel, plastics, aluminum and other materials.

As the requirement for straight-line interconnection of pipes is widespread, a large market exists for pipe couplings for this purpose, and many different designs have been disclosed. Some have been commercially developed as a solution for closely-defined requirements. In choosing a coupling much depends on factors such as the material of the pipe, whether an external anchor (such as a flange) is available, pipe diameter and variation of said diameter expected, the fluid being transported, stresses expected, environmental conditions, whether the joint is to be permanent or openable, whether welding is allowed or not, the allowed hydraulic resistance and further factors. Thus, there is no best coupling for all applications. All that can be said is that the best coupling is the lowest cost item that meets all the requirements of a specified application.

The following recent US Patents and Patent Applications provide a fair picture of the state of the art in this field.

A pipe clamp composed of two clamp halves, each provided with its own tension band is disclosed by Weinhold in US Patent No. 6,672,631. The device has a quick-acting closure, but no protection against axial separating forces, and in use it is difficult to prevent fluid leakage due to gaps between the two bands.

Wraith et al disclose a plastic pipe coupling in US Patent No. 6,676,166. The device would not be usable for large diameter steel pipes as the assembly forces required would be very large and also the coupling can not be tightened to prevent leakage.

The design seen in US Patent No. 6,739,630 to Riedy is unsuitable for large diameter pipes as it requires one end of one of the pipes to carry an external threw thread. Furthermore there remains the difficult task of revolving the large diameter nut sleeve while preventing revolution of the pipe carrying the male thread in order to apply the coupling.

A further band clamp coupling is seen in US Patent No. 6,749,232 to Wachter et al. Provision is made for deterring axial separation but sealing this type of clamp against leakage is problematic due to the gap between the ends of the band.

Komolrochanaporn discloses a push-pull pipe coupling in US Patent No. 6,824,172. Both fluid sealing and mechanical retention are provided. There is however no way of tightening the seal, and this type of coupler is unsuited for large diameter pipes and cannot handle pipe diameter variations.

Rex et al. disclose a pipe coupling in US Patent No. 6,843,514 which could be suitable for large diameter pipes. It is however not clear how the gripping device is to handle pipe diameter variations. The thin seal used and its indirect manner of applying pressure to the outer surface of the pipes appear to be the weak points of this design.

In US Patent No. 6,851,728 to Minami discloses a pipe coupling provided with both sealing and gripping members. However the design does not make provision for substantial outer diameter variations and the locking mechanism would be difficult to operate if applied to large diameter pipes.

Wartluft in US Patent No. 6,877,777 discloses a complex coupling which requires the insertion of a sleeve into the bore of the pipes to be interconnected. Any intrusion into the inner space of a pipe is of course detrimental, in increasing the hydraulic resistance of the pipeline.

In US Patent Application No. 2004/0094950 Ko discloses a pipe coupling which is claimed to enable pipes to be assembled by a one-touch operation while maintaining liquid-tightness at the jointing. There is however no provision for enabling the coupling of pipes having slightly different diameters.

Dole et al. in US Patent Application No. 2005/0242585 propose a coupling based on keys having camming surfaces. Each key is engageable with a groove on one of the pipes. The obvious problem here is that the technician working in the field has no means at hand for cutting such a groove in a large diameter pipe.

The pipe coupling proposed by Gill in US Patent Application No. 2006/0220381 includes four clamp members which contact the pipes at two approximately opposite sides. The clamp members provide some leeway in pipe outer diameter and could be suitable for medium pipe sizes. However the construction of this type of clamp is prohibitively expensive in large diameters, and would not provide substantial resistance to axial separation.

### OBJECTS OF THE INVENTION

It is therefore one of the obj ects of the present invention to obviate the disadvantages of prior art pipe couplings and to provide a coupling which makes no demand for machining the ends of the pipes to be joined, and can be used to join two pipes equal in diameter and also two pipes where there is a difference between the pipe diameters of up to about 10% of the smaller pipe.

It is a further object of the present invention to provide a coupling which has adequate arrangements for both mechanical and fluid retention.

It is a further object of the present invention to provide such a coupling which can be installed in the field without requiring any machining operations.

Yet a further object of the invention is to join the pipe ends without any intrusion on the pipe inner diameter.

### SUMMARY OF THE INVENTION

The present invention achieves the above objects by providing an improved releasable band-clamp coupling for mechanical and hydraulic interconnection of the ends of a first pipe and a co-axial second pipe, said first pipe being equal to or up to 10% larger than the diameter said second pipe, said coupling comprising:
a) a central housing of cross-section resembling a wide, low-wall channel, the walls thereof facing away from the center of said pipes and the housing being curved to be larger than the said first pipe outer diameter;
b) two curved outer clamp members each configured to contact a wall of said central housing and to support a ring seal member and to support at least one sloped grip washer, said outer clamp members low-wall inner channel fitting into said outer channel preventing separation therebetween, there being further provided proximate to the ends of said curved outer clamp members a pair of substantially parallel pair of clamping extensions;
c) a sloped internally-toothed grip washer disposed proximate to each of said projection second sides;
d) a pair of two-part circumferential elastomeric seal members comprising a thicker portion and a thinner portion, the two seal portions being readily separated in the field if desired, a first of said seal members being in stacked formation disposed inside the said outer housing located on the side of the smaller diameter pipe, and of the second said seal member either said thicker portion or said thinner portion being disposed inside said outer housing located over the side of said larger diameter pipe, the remaining portion of said second seal member being disposable; and
e) screw clamping elements in contact with said clamping extensions to reduce the distance between said substantially parallel clamping extensions, forcing both said internally-toothed grip washer and said elastomeric seal member into circumferential contact with said pipes.

In a preferred embodiment of the present invention there is provided a releasable coupling wherein the internal diameter of said sloped internally-toothed grip washer is smaller than the internal diameter of said outer housing and larger than the internal diameter of said seal member when assembled over a pipe end.

In another preferred embodiment of the present invention there is provided a releasable coupling wherein said sloped internally-toothed grip washer is split by a radial gap. Preferably the grip washer is made of hardened steel.

In a most preferred embodiment of the present invention there is provided a releasable coupling wherein said seal member extends along the length of said central housing, each extremity thereof being clamped in one of said two curved outer clamp members, a major portion of said seal member being disposed inside said central housing.

It will thus be realized that the novel device of the present invention achieves its objects by providing a seal element composed of two components, either or both of which can be used. Because the two stacked seal components are of different thickness, 3 options are available: use of the thinner component, use of the thicker component and use of both together. This of course is in addition to the band structure which adapts itself to the pipe diameter where both pipes are of the same size.

The present invention refers to couplings for large diameter pipes. It could be thought that scaling up a coupling for a small diameter pipe would provide a suitable solution also for large pipes. This however is not so, as has been explained in one of our previous applications as follows.

For example, if a pipe of D diameter is compared to a pipe 3D (three times diameter D) the axial fluid force to be resisted increases by a factor of 9, yet the length of the pipe periphery available for gripping the pipe has increased only by a factor of 3. Thus a gripping method satisfactory for a small pipe will serve poorly for the larger pipe. The weight of the coupling increases by a factor of about 7 - 8, depending on the design. Furthermore, some joining techniques such as swage angling the pipe end, or such as machining an external screw thread on the pipe and using a simple internally-screwed sleeve coupling are completely impractical for large diameter pipes, although commonly used for small pipes. The weight of the large pipe may in itself pose difficulties in manipulation thereof, as the 3D pipe will weigh about 9 times as much as the weight per meter of the D diameter pipe.

Thus it is clear that large diameter piping can not be handled as scaled up small diameter piping.

It will be realized that the novel device of the present invention meets all the requirements for a coupling for large diameter pipes, and is particularly suitable where pipe diameter variations are expected.
a) No welding is required, and the couple can be removed and reused.
b) There is no flow-restriction or contraction of the inner diameter of the pipes, allowing full flow without adding hydraulic resistance.
c) Resistance to axial-direction separation when under fluid pressure is provided.
d) Effective sealing is obtained during tightening of the screws/nuts.
e) The coupling comprises of a few simple components which can be economically manufactured.
f) The coupling can be installed by a technician working in the field on a site far from the factory, and requires only simple portable tools for this purpose.

The invention will now be described further with reference to the accompanying drawings, which represent by example preferred embodiments of the invention. Structural details are shown only as far as necessary for a fundamental understanding thereof. The described examples, together with the drawings, will make apparent to those skilled in the art how further forms of the invention may be realized.

### BRIEF DESCRIPTION OF THE DRAWINGS

FIG. 1 is a sectional view of a preferred embodiment of the coupling according to the invention;
FIGS. 2 and 3 are detail sections of the ends of the same coupling;
FIG. 4 is an elevational view of the sloped grip washer; and
FIG. 5 is a sectioned elevational view of an embodiment having improved leak resistance.

### DETAILED DESCRIPTION OF PREFERRED EXEMPLARY EMBODIMENTS

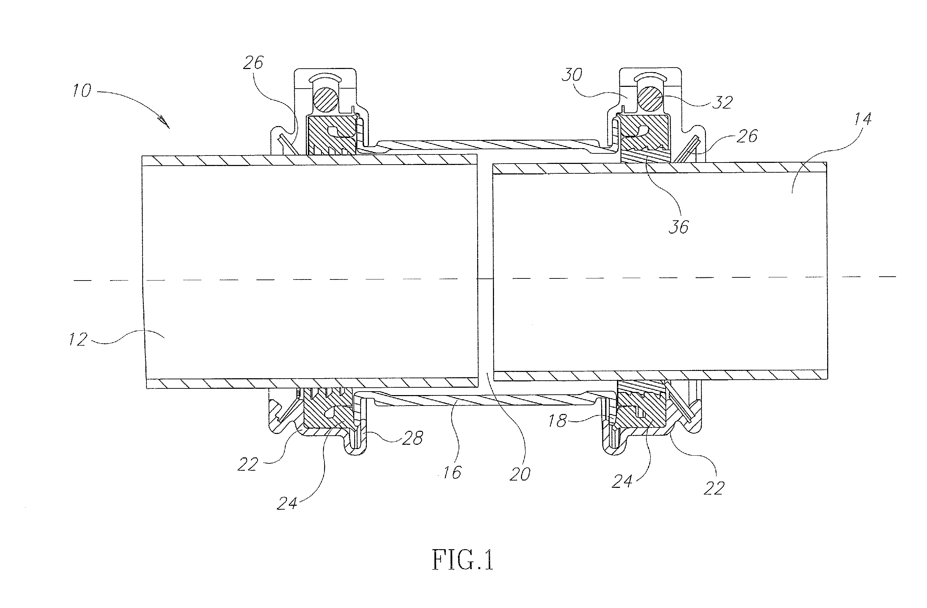

There is seen in FIG. 1 an improved releasable band-clamp coupling 10 for mechanical and hydraulic interconnection of the ends of a first pipe 12 and a co-axial second pipe 14. Both pipes are at least 50mm outer diameter, the first pipe 12 being equal to or up to 55mm larger than the diameter of the second pipe 14.

A central connector housing 16 has a cross-section resembling a wide, low-wall channel, the walls 18 thereof facing away from the gap 20, if any, between the pipes 12, 14. The housing 16 is curved at a radius larger than that of the first pipe outer diameter.

Two curved outer clamp members 22 are each configured to contact a wall 18 of the central housing 16, and further to support a ring seal member 24. Also supported in the outer clamp members 22 is a sloped grip washer 26. The outer clamp members 22 have a low-wall inner channel 28, each of which fits into the central connecting housing wall 18.

A pair of substantially parallel clamping extensions 30 is provided proximate to the ends of the curved outer clamp members 22. As in prior art band couplings the screw clamping elements 32 engage the clamping extensions 30 to reduce the distance between the substantially parallel clamping extensions 30, forcing the elastomeric seal member(s) into circumferential contact with the pipes 12, 14.

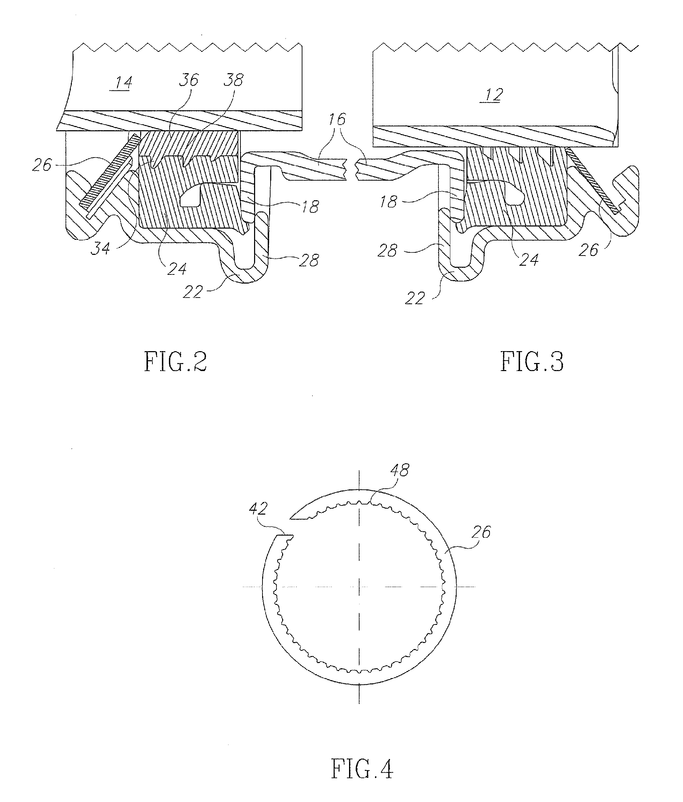

An internally-toothed grip washer 26 is disposed at a slope inside of each of the outer clamp members 22. As the clamping extensions 30 are pulled together the grip washers 26 engage the pipes 12, 14. More details of the internally-toothed grip washer will given with reference to FIG 4.

A pair of two-part circumferential elastomeric seal members comprising a thicker portion 24 and a thinner portion 36, are seen in the detail view of FIG.2. The two seal portions 24, 36 are configured to be readily separated in the field if desired, the two portions being in stacked formation and being provided with grooves 38 and complementary teeth to maintain alignment also under high pressure. Both portions 24, 36 are seen disposed inside the outer clamp members 22 on the side of the second, smaller diameter pipe 14.

Only the thicker seal portion 24 is seen deployed on the larger diameter pipe 12 in FIG. 3. However if the first larger pipe 12 were yet larger, the thinner seal portion 36 would have been deployed instead of the thicker portion 24. The remaining unused portion of the second seal member can be stored or disposed of.

With reference to the rest of the figures, similar reference numerals have been used to identify similar parts.

Referring now to FIG. 4, there is seen a preferred embodiment of the sloped internally-toothed grip washer 26. The internal diameter 38 of the washer is smaller than the internal diameter of the outer clamp members 22 seen in FIG. 1, and larger than the internal diameter of the seal member 24, 36 before compression when assembled over a pipe end 12, 14 as also seen in FIG. 1. The grip washer 26 is seen split by a radial gap 42 to increase its working range.

For use when joining steel pipes 12, 14 the grip washer 26 is preferably made of hardened steel. Where the pipes to be coupled are made of softer materials the material of manufacture can be an untreated carbon or stainless steel, or any other suitable material.

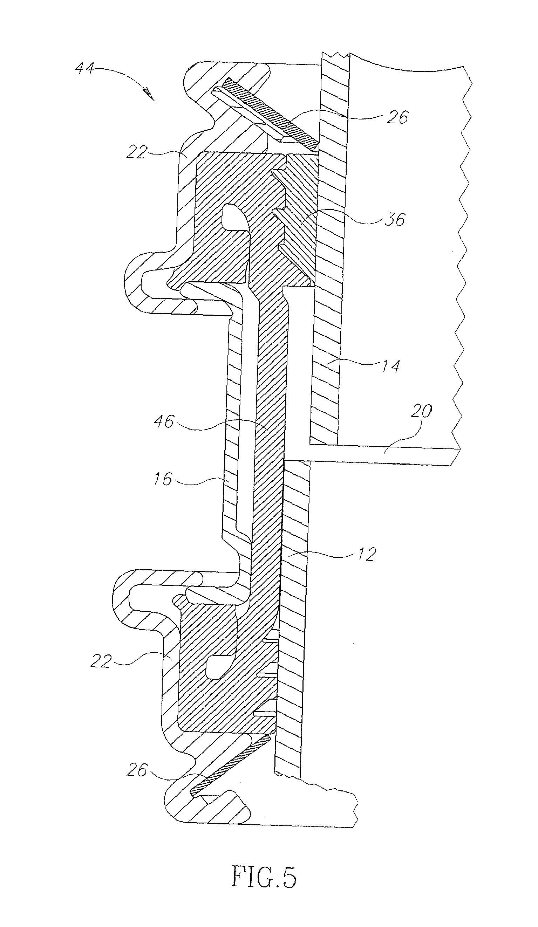

FIG. 5 illustrates a detail of an embodiment 44 wherein a broad sealing element 46 extends along the major portion of the coupling 44, thus excluding the possibility of leakage originating between the pipe ends. The thinner portion 36 of the seal element can be used at either end of the coupling, is here shown on the upper side. The thinner portion 36 is shown inside the sealing element 46. It could alternatively be positioned between the sealing element 46 and the outer clamp members 22.

The scope of the described invention is intended to include all embodiments coming within the meaning of the following claims. The foregoing examples illustrate useful forms of the invention, but are not to be considered as limiting its scope, as those skilled in the art will readily be aware that additional variants and modifications of the invention can be formulated without departing from the meaning of the following claims.

## Claims

1. An improved releasable band-clamp coupling for mechanical and hydraulic interconnection of the ends of a first pipe and a co-axial second pipe, both being at least 50mm outer diameter, said first pipe being equal to or up to 55mm larger than the diameter said second pipe, said coupling comprising:
a) a central housing of cross-section resembling a wide, low-wall channel, the walls thereof facing away from the center of said pipes and the housing being curved to be larger than the said first pipe outer diameter;
b) two curved outer clamp members each configured to contact a wall of said central housing and to support a ring seal member and to support at least one sloped grip washer, said outer clamp members low-wall inner channel fitting into said outer channel to prevent separation therebetween, there being further provided proximate to the ends of said curved outer clamp members a pair of substantially parallel pair of clamping extensions;
c) a sloped internally-toothed grip washer disposed proximate to each of said projection second sides;
d) a pair of two-part circumferential elastomeric seal members comprising a thicker portion and a thinner portion, the two seal portions being readily separated in the field if desired, a first of said seal members being in stacked formation disposed inside the said outer housing located on the side of the smaller diameter pipe, and of the second said seal member either said thicker portion or said thinner portion being disposed inside said outer housing located over the side of said larger diameter pipe, the remaining portion of said second seal member being disposable; and
e) screw clamping elements in contact with said clamping extensions to reduce the distance between said substantially parallel clamping extensions, forcing both said internally-toothed grip washer and said elastomeric seal member into circumferential contact with said pipes.

2. The releasable coupling as claimed in claim 1, wherein the internal diameter of said sloped internally-toothed grip washer is smaller than the internal diameter of said outer housing and larger than the internal diameter of said seal member when assembled over a pipe end.

3. The releasable coupling as claimed in claim 1, wherein said sloped internally-toothed grip washer is split by a radial gap.

4. The releasable coupling as claimed in claim 1, wherein said sloped internally-toothed grip washer is made of hardened steel.

5. The releasable coupling as claimed in claim 1, wherein said seal member extends along the length of said central housing, each extremity thereof being clamped in one of said two curved outer clamp members, a major portion of said seal member being disposed inside said central housing.
